# EUROPEAN PATENT APPLICATION

(11) **EP 0 544 518 A1**
(43) Date of publication of application: **02.06.1993**
(21) Application number: 92310785.8
(22) Date of filing: 25.11.1992
(51) Int. Cl.: A01N 37/36

(54) **Pesticidal composition**

(30) Priority: 27.11.1991 JP 312494/91
(71) Applicant: SUMITOMO CHEMICAL COMPANY, LIMITED, Chuo-ku Osaka 541 (JP)
(72) Inventor: Ohtsubo, Toshiro, Sanda-shi (JP); Manabe, Yukio, Toyonaka-shi (JP); Ogawa, Masao, Toyonaka-shi (JP); Fukunaga, Yuji, Toyonaka-shi (JP); Tsuda, Shigenori, Nishikyo-ku, Kyoto-shi (JP)
(74) Representative: Coleiro, Raymond

(57) **Abstract**

A pesticidal composition having an increased pesticidal efficacy contains (a) one or more pesticidally active ingredients and (b) 12-hydroxystearic acid.

## Description

The present invention relates to a pesticidal composition containing (a) at least one pesticidally active ingredient and (b) 12-hydroxystearic acid.

Recently, public attention has been drawn to the problems of environmental pollution. In this connection, damage to the environment by pesticides has become a problem, and a reduction in this damage has been demanded.

Also, there has been increasing demands for reducing the labor of users who apply pesticides by, for example, reducing the dosage of pesticides or the number of times the pesticides need to be applied.

In recognition of the situation, we have made an extensive study, and as a result have found that the addition of 12-hydroxystearic acid to a pesticidally active ingredient unexpectedly increases the efficacy thereof.

The present invention relates to a pesticidal composition containing (a) at least one pesticidally active ingredient and (b) 12-hydroxystearic acid (hereinafter referred to as present composition). The dosage of the active ingredient in the present composition can be decreased as compared with the conventional pesticidal compositions, because the efficacy of the present composition is far higher than the conventional pesticidal compositions. Thus, the present composition is useful with regard to the above-mentioned requirements.

The active ingredient in the present composition is not critical. It can be selected from various active ingredients such as insecticides (e.g. pyrethroids, organophosphorates and carbamates), acaricides, nematocides, insect growth regulators, fungicides, herbicides, plant growth regulators and the like. For example, there are given the following compounds, their active isomers and the mixtures thereof.

Compound No. Names of compounds
(1) α-cyano-3-phenoxybenzyl 2-(4-chlorophenyl)-3-methylbutyrate,
(2) (S)-α-cyano-3-phenoxybenzyl (S)-2-(4-chlorophenyl)-3-methylbutyrate,
(3) α-cyano-3-phenoxybenzyl 2,2,3,3-tetramethylcyclopropanecarboxylate,
(4) 3-phenoxybenzyl 3-(2,2-dichlorovinyl)-2,2-dimethylcyclopropanecarboxylate,
(5) 3-phenoxybenzyl chrysanthemate,
(6) 3-phenoxybenzyl (1R)-chrysanthemate,
(7) α-cyano-3-phenoxybenzyl 3-(2,2-dichlorovinyl)-2,2-dimethylcyclopropanecarboxylate,
(8) α-cyano-3-(4-bromophenoxy)benzyl 3-(2,2-dichlorovinyl)-2,2-dimethylcyclopropane carboxylate,
(9) α-cyano-3-(4-fluorophenoxy)benzyl 3-(2,2-dichlorovinyl)-2,2-dimethylcyclopropanecarboxylate,
(10) α-cyano-3-(3-bromophenoxy)benzyl 3-(2,2-dichlorovinyl)-2,2-dimethylcyclopropanecarboxylate,
(11) α-cyano-3-(4-chlorophenoxy)benzyl 3-(2,2-dichlorovinyl)-2,2-dimethylcyclopropanecarboxylate,
(12) α-cyano-3-phenoxybenzyl chrysanthemate,
(13) α-cyano-3-phenoxybenzyl (1R)-chrysanthemate,
(14) α-cyano-3-(4-bromophenoxy)benzyl 2-(4-chlorophenyl)-3-methylbutyrate,
(15) α-cyano-3-(3-bromophenoxy)benzyl 2-(4-chlorophenyl)-3-methylbutyrate,
(16) α-cyano-3-(4-chlorophenoxy)benzyl 2-(4-chlorophenyl)-3-methylbutyrate,
(17) α-cyano-3-(4-fluorophenoxy)benzyl 2-(4-chlorophenyl)-3-methylbutyrate,
(18) α-cyano-3-phenoxybenzyl 2-(4-bromophenyl)-3-methylbutyrate,
(19) α-cyano-3-phenoxybenzyl 2-(4-tert-butylphenyl)-3-methylbutyrate,
(20) α-cyano-3-phenoxybenzyl 2-(3,4-methylenedioxyphenyl)-3-methylbutyrate,
(21) α-cyano-4-fluoro-3-phenoxybenzyl 3-(2,2-dichlorovinyl)-2,2-dimethylcyclopropanecarboxylate,
(22) α-cyano-3-phenoxybenzyl 2-(2-chloro-4-trifluoromethylanilino)-3-methylbutyrate,
(23) α-cyano-3-phenoxybenzyl 2-(4-difluoromethoxyphenyl)-3-methylbutyrate,
(24) α-cyano-3-phenoxybenzyl (S)-2-(4-difluoromethoxyphenyl)-3-methylbutyrate,
(25) α-cyano-(5-phenoxy-2-pyridyl)methyl 3-(2,2-dichlorovinyl)-2,2-dimethylcyclopropanecarboxylate,
(26) α-cyano-3-phenoxybenzyl 2,2-dimethyl-3-(1,2,2,2-tetrabromoethyl)cyclopropanecarboxylate,
(27) α-cyano-3-phenoxybenzyl 2,2-dimethyl-3-(1,2-dichloro-2,2-dibromoethyl)cyclopropanecarboxylate,
(28) α-cyano-3-phenoxybenzyl 1-(4-ethoxyphenyl)-2,2-dichlorocyclopropanecarboxylate,
(29) α-cyano-3-phenoxybenzyl 2,2-dimethyl-3-(2-chloro-2-trifluoromethylvinyl)cyclopropanecarboxylate,
(30) 2-(4-ethoxyphenyl)-2-methylpropyl 3-phenoxybenzyl ether,
(31) 2-(4-ethoxyphenyl)-3,3,3-trifluoropropyl 3-phenoxybenzyl ether,
(32) 2-methyl-3-phenylbenzyl (1R, trans)-2,2-dimethyl-3-(2-chloro-2-trifluoromethylvinyl)cyclopropanecarboxylate,
(33) 2,3,5,6-tetrafluoro-4-methylbenzyl (1R, trans)-2,2-dimethyl-3-(2-chloro-2-trifluoromethyl vinyl)cyclopropanecarboxylate,
(34) 3,4,5,6-tetrahydrophthalimidomethyl chrysanthemate,
(35) 3,4,5,6-tetrahydrophthalimidomethyl (1R)-chrysanthemate,
(36) 3-allyl-2-methyl-4-oxocyclopent-2-enyl chrysanthemate,
(37) 3-allyl-2-methyl-4-oxocyclopent-2-enyl (1R)-chrysanthemate,
(38) (S)-2-methyl-4-oxo-3-(2-propynyl)cyclopent-2-enyl (1R)-chrysanthemate,
(39) 1-ethynyl-2-methyl-2-pentenyl (1R)-chrysanthemate,
(40) 5-benzyl-3-furylmethyl chrysanthemate,
(41) 5-benzyl-3-furylmethyl (1R)-chrysanthemate,
(42) α-cyano-3-(4-bromophenoxy)benzyl 3-(2,2-dibromovinyl)-2,2-dimethylcyclopropanecarboxylate,
(43) O,O-dimethyl O-(3-methyl-4-nitrophenyl) phosphorothioate,
(44) O,O-dimethyl S-[1,2-di(ethoxycarbonyl)ethyl] phosphorodithioate,
(45) O,O-dimethyl O-(4-cyanophenyl) phosphorothioate,
(46) O,O-dimethyl S-(α-ethoxycarbonylbenzyl) phosphorodithioate,
(47) O,O-diethyl O-(2-isopropyl-4-methyl-6-pyrimidinyl) phosphorothioate,
(48) O,O-dimethyl O-[3-methyl-4-(methylthio)phenyl] phosphorothioate,
(49) O-(4-bromo-2,5-dichlorophenyl) O,O-diethyl phosphorothioate,
(50) 2-methoxy-4H-1,3,2-benzoxaphosphorin-2-sulfide,
(51) O,O-dimethyl O-(2,4,5-trichlorophenyl) phosphorothioate,
(52) O,O-diethyl O-(3,5,6-trichloro-2-pyridyl) phosphorothioate,
(53) O,O-dimethyl O-(3,5,6-trichloro-2-pyridyl) phosphorothioate,
(54) O,O-dimethyl O-(4-bromo-2,5-dichlorophenyl) phosphorothioate,
(55) dimethyl 2,2-dichlorovinyl phosphate,
(56) O,S-dimethyl N-acetyl phosphoroamidothioate,
(57) O-(2,4-dichlorophenyl) O-ethyl S-propyl phosphorodithioate,
(58) O,O-dimethyl S-(5-methoxy-1,3,4-thiadiazolin-2-on-3-ylmethyl) phosphorodithioate,
(59) dimethyl 2,2,2-trichloro-1-hydroxyethyl phosphonate,
(60) O-ethyl O-(4-nitrophenyl) benzenephosphonothioate,
(61) O,O-dimethyl S-(N-methylcarbamoylmethyl) phosphorodithioate,
(62) 2-sec-butylphenyl N-methylcarbamate,
(63) 3-methylphenyl N-methylcarbamate,
(64) 3,4-dimethylphenyl N-methylcarbamate,
(65) 2-isopropoxyphenyl N-methylcarbamate,
(66) 1-naphthyl N-methylcarbamate,
(67) 2-isopropylphenyl N-methylcarbamate,
(68) O,O-diethyl S-[2-(ethylthio)ethyl] phosphorodithioate,
(69) S-methyl N-[(methylcarbamoyl)oxy] thioacetoimidate,
(70) trans-5-(4-chlorophenyl)-N-cyclohexyl-4-methyl-2-oxothiazolidin-3-carboxamide,
(71) 2,3-dihydro-2,2-dimethyl-7-benzofuranyl N-dibutylaminothio-N-methylcarbamate,
(72) N,N-dimethyl-1,2,3-trithian-S-ylamine,
(73) 1,3-bis(carbamoylthio)-2-(N,N-dimethylamino)propane hydrochloride,
(74) ethyl N-[2,3-dihydro-2,2-dimethylbenzofuran-7-yloxycarbonyl(methyl)aminothio]-N-isopropyl-β-alaninate,
(75) 1-[3,5-dichloro-4-(3-chloro-5-trifluoromethyl-2-pyridyloxy)phenyl]-3-(2,6-difluorobenzoyl)urea,
(76) 1-(3,5-dichloro-2,4-difluorophenyl)-3-(2,6-difluorobenzoyl)urea,
(77) 1-[3,5-dichloro-4-(1,1,2,2-tetrafluoroethoxy)phenyl]-3-(2,6-difluorobenzoyl)urea,
(78) ethyl 2-(4-phenoxyphenoxy)ethylcarbamate,
(79) 2-tert-butyl-5-(4-tert-butylbenzylthio)-4-chloropyridazin-3(2H)-one,
(80) 1-[4-(2-chloro-4-trifluoromethylphenoxy)-2-fluorophenyl]-3-(2,6-difluorobenzoyl)urea,
(81) tert-butyl (E)-α-(1,3-dimethyl-5-phenoxypyrazol-4-ylmethylenaminoxy)-p-toluate,
(82) 3,7,9,13-tetramethyl-5,11-dioxa-2,8,14-trithia-4,7,9,12-tetraazapentadeca-3,12-diene-6,10-dione,
(83) 1-(6-chloro-3-pyridylmethyl)-N-nitroimidazolidin-2-yldenamine,
(84) 5-ethoxy-3-trichloromethyl-1,2,4-thiadiazole,
(85) O,O-diisopropyl S-benzyl phosphorothiolate,
(86) O-ethyl S,S-diphenyl dithiophosphate,
(87) Polyoxin,
(88) Blasticidin S,
(89) 3,4-dichloropropionanilide,
(90) isopropyl N-(3-chlorophenyl)carbamate,
(91) S-ethyl N,N-dipropylthiolcarbamate,
(92) 3-methoxycarbonylaminophenyl N-(3-methylphenyl)carbamate,
(93) N-methoxymethyl-2-chloro-2',6'-diethylacetanilide,
(94) 2,6-dinitro-N,N-dipropyl-4-trifluoro methylaniline,
(95) S-(4-chlorobenzyl) N,N-diethylthiolcarbamate,
(96) S-ethyl N,N-hexamethylenethiolcarbamate,
(97) N-(1,1,3-trimethyl-2-oxa-4-indanyl)-5-chloro-1,3-dimethylpyrazol-4-carboxamide,
(98) 3'-isopropoxy-2-(trifluoromethyl)benzanilide,
(99) diisopropyl 1,3-dithiolan-2-ylidenemalonate,
(100) 1,2,5,6-tetrahydropyrrolo[3,2,1-i,j]quinolin-4-one,
(101) 3-allyloxy-1,2-benzoisothiazole-1,1-dioxide,
(102) 5-methyl[1,2,4]triazolo[3,4-b]benzothiazole,
(103) 1,2-bis(3-methoxycarbonyl-2-thioureido)benzene,
(104) 1-(4-chlorobenzyl)-1-cyclopentyl-3-phenylurea,
(105) Validamycin A,
(106) 6-(3,5-dichloro-4-methylphenyl)-3(2H)pyridazinone,
(107) Kasugamycin hydrochloride,
(108) methyl 1-(butylcarbamoyl)benzimidazole-2-carbamate,
(109) 3-(3,5-dichlorophenyl)-N-isopropyl-2,4-dioxoimidazolidine-1-carboxamide,
(110) 3-(3,5-dichlorophenyl)-5-methyl-5-vinyl-1,3-oxazolidine-2,4-dione,
(111) manganese ethylenebisdithiocarbamate,
(112) manganese and zinc ethylenebisdithiocarbamate,
(113) N-(trichloromethylthio)cyclohex-4-ene-1,2-dicarboximide,
(114) 3'-isopropoxy-2-methylbenzanilide,
(115) 3-hydroxy-5-methylisoxazole,
(116) tetrachloroisophthalonitrile,
(117) 1,1'-iminodi(octamethylene)diguanidine,
(118) 1-(4-chlorophenoxy)-3,3-dimethyl-1-(1H,1,2,4-triazol-1-yl)butanone,
(119) (E)-4-chloro-2-(trifluoromethyl)-N-[1-(imidazol-1-yl)-2-propoxyethylidene]aniline,
(120) methyl N-(methoxyacetyl)-N-(2,6-dimethylphenyl)alaninate,
(121) 3-chloro-N-(3-chloro-5-trifluoromethyl-2-pyridyl)-2,6-dinitro-4-methylaniline,
(122) N-butoxymethyl-2-chloro-2',6'-diethylacetanilide,
(123) O-ethyl O-(5-methyl-2-nitrophenyl)-sec-butyl phosphoroamidothioate,
(124) ethyl N-chloroacetyl-N-(2,6-diethylphenyl)glycinate,
(125) 2-[1-methyl-2-(4-phenoxyphenoxy)ethoxy]pyridine,
(126) (E)-1-(4-chlorophenyl)-4,4-dimethyl-2-(1H-1,2,4-triazol-1-yl)-1-penten-3-ol,
(127) 1-(4-chlorophenyl)-4,4-dimethyl-2-(1H-1,2,4-triazol-1-yl)-pentan-3-ol,
(128) 2-bromo-N-(α,α-dimethylbenzyl)-3,3-dimethylbutanamide,
(129) 1-(1-methyl-1-phenylethyl)-3-(p-tolyl)urea,
(130) 2-(2-naphthoxy)propionanilide,
(131) 2-(2,4-dichloro-3-methylphenoxy)propionanilide,
(132) 4-(2,4-dichlorobenzoyl)-1,3-dimethyl-5-pyrazolyl p-toluenesulfonate,
(133) 4-(2,4-dichlorobenzoyl)-1,3-dimethyl-5-phenacyloxypyrazole,
(134) 4-(2,4-dichloro-3-methylbenzoyl)-1,3-dimethyl-5-(4-methylphenacyloxy)pyrazole,
(135) 2,4,6-trichlorophenyl 4-nitrophenyl ether,
(136) 2,4-dichlorophenyl 3-methoxy-4-nitrophenyl ether,
(137) 2,4-dichlorophenyl 3-methoxycarbonyl-4-nitrophenyl ether,
(138) -2-benzothiazol-2-yloxy-N-methylacetanilide,
(139) 2',3'-dichloro-4-ethoxymethoxybenzanilide,
(140) 5-tert-butyl-3-(2,4-dichloro-5-isopropoxyphenyl)-1,3,4-oxadiazol-2-(3H)-one,
(141) 2-amino-3-chloro-1,4-naphthoquinone,
(142) methyl 2-[3-(4,6-dimethoxypyrimidin-2-yl)ureidosulfonylmethyl]benzoate,
(143) 3,7-dichloroquinoline-8-carboxylic acid,
(144) ethyl 5-[3-(4,6-dimethoxypyrimidin-2-yl)ureidosulfonyl]-1-methylpyrazole-4-carboxylate,
(145) 3-chloro-2-[4-chloro-2-fluoro-5-(2-propynyloxy)phenyl]-4,5,6,7-tetrahydro-2H-indazole,
(146) O-(4-tert-butylphenyl) N-(6-methoxy-2-pyridyl)-N-methylthionocarbamate,
(147) O-(3-tert-butylphenyl) N-(6-methoxy-2-pyridyl)-N-methylthionocarbamate,
(148) O-(4-chloro-3-ethylphenyl) N-(6-methoxy-2-pyridyl)-N-methylthionocarbamate,
(149) O-(4-bromo-3-ethylphenyl) N-(6-methoxy-2-pyridyl)-N-methylthionocarbamate,
(150) O-(3-tert-butyl-4-chlorophenyl) N-(6-methoxy-2-pyridyl)-N-methylthionocarbamate,
(151) O-(4-trifluoromethylphenyl) N-(6-methoxy-2-pyridyl)-N-methylthionocarbamate,
(152) 1-(2-chlorobenzyl)-3-(α,α-dimethylbenzyl)urea,
(153) N-(3,5-dichlorophenyl)-1,2-dimethylcyclopropane-1,2-dicarboximide,
(154) O-(2,6-dichloro-4-methoxyphenyl) O,O-dimethyl phosphorothioate,
(155) 1-ethyl-1,4-dihydro-6,7-methylenedioxy-4-oxo-3-quinolinecarboxylic acid,
(156) (E)-1-(2,4-dichlorophenyl)-4,4-dimethyl-2-(1H-1,2,4-triazol-1-yl)-1-penten-3-ol,
(157) isopropyl 3,4-diethoxyphenylcarbamate,
(158) N-[4-chloro-2-fluoro-5-(1-methyl-2-propynyloxy)phenyl]-3,4,5,6-tetrahydro phthalimide,
(159) N-[4-chloro-2-fluoro-5-(pentyloxycarbonyl methoxy)phenyl]-3,4,5,6-tetrahydrophthalimide,
(160) 7-fluoro-6-(3,4,5,6-tetrahydrophthalimido)-4-(2-propynyl)-3,4-dihydro-1,4-benzoxazin-3(2H)-one,
(161) 2-[1-(ethoxyimino)ethyl]-3-hydroxy-5-[2-[4-(trifluoromethyl)phenylthio]ethyl]-2-cyclohexen-1-one,
(162) 1-(4-chlorophenyl)-3-(2,6-difluorobenzoyl)urea,
(163) isopropyl (2E,4E)-11-methoxy-3,7,11-trimethyl-2,4-dodecadienoate,
(164) 2-tert-butylimino-3-isopropyl-5-phenyl-3,4,5,6-tetrahydro-2H-1,3,5-thiadiazin-4-one,
(165) 2-phenoxy-6-(neopentyloxymethyl)pyridine,
(166) 3-chloro-2-[7-fluoro-4-(2-propynyl)-3,4-dihydro-1,4-benzoxazin-3(2H)-on-6-yl]-4,5,6,7-tetrahydro-2H-indazole,
(167) 4'-chloro-2'-(α-hydroxybenzyl)isonicotinanilide,
(168) 6-(benzylamino)purine,
(169) 5-chloro-3-methyl-4-nitro-1H-pyrazole,
(170) 2-chloroethyltrimethylammonium chloride,
(171) 2-(3-chlorophenoxy)propionic acid,
(172) 3-(4-chlorophenyl)-1,1-dimethylurea,
(173) 2,4-dichlorophenoxyacetic acid,
(174) 3-(3,4-dichlorophenyl)-1,1-dimethylurea,
(175) 1,1'-ethylene-2,2'-bipyridinium dibromide,
(176) maleic hydrazide,
(177) 2,4-dinitro-6-sec-butylphenol,
(178) 2,4-dimethyl-5-(trifluoromethylsulfonylamino)acetanilide,
(179) 6-(furfurylamino)purine,
(180) β-hydroxyethylhydrazine,
(181) 3-indoleacetic acid,
(182) 3-methyl-5-(1-hydroxy-4-oxo-2,6,6-trimethyl-2-cyclohexen-1-yl) cis, trans-2,4-pentadienic acid,
(183) 1-naphthoxyacetic acid,
(184) 7-oxabicyclo[2.2.1]heptane-2,3-dicarboxylic acid monoalkylamine salt,
(185) 1-phenyl-3-[4-(2-chloropyridyl)]urea,
(186) sodium 5-chloro-1H-indazol-3-ylacetate,
(187) S,S-dimethyl 2-(difluoromethyl)-4-(2-methylpropyl)-6-(trifluoromethyl)pyridine-3,5-dicarbothioate,
(188) 3-(4,6-dimethoxy-1,3,5-triazin-2-yl)-1-[2-(2-methoxyethoxy)phenylsulfonyl]urea,
(189) exo-1-methyl-4-(1-methylethyl)-2-(2-methylphenylmethoxy)-7-oxabicyclo[2.2.1]heptane,
(190) 2',6'-diethyl-N-[(2-cis-butenoxy)methyl]-2-chloroacetanilide,
(191) 2,3-dihydro-3,3-dimethyl-5-benzofuranyl ethanesulfonate,
(192) 2',6'-dimethyl-N-(3-methoxy-2-thenyl)-2-chloroacetanilide,
(193) 1-(2-chloroimidazo[1,2-a]pyridin-3-ylsulfonyl)-3-(4,6-dimethoxy-2-pyrimidinyl)urea,
(194) 3-isopropyl-1H-2,1,3-benzothiadiazin-4(3H)-one-2,2-dioxide,
(195) 2-(1-ethoxyiminobutyl)-5-[2-(ethylthio)propyl]-3-hydroxycyclohex-2-en-1-one,
(196) 2',6'-diethyl-N-(2-propoxyethyl)-2-chloroacetanilide,
(197) 1,1'-dimethyl-4,4'-bipyridinium dichloride,
(198) S-(1-methyl-1-phenylethyl) piperidine-1-carbothioate,
(199) S-(2-methyl-1-piperidinecarbonylmethyl) O,O-dipropyl dithiophosphate,
(200) S-benzyl N-ethyl-N-(1,2-dimethylpropyl) thiolcarbamate,
(201) 2-chloro-4-ethylamino-6-isopropylamino-1,3,5-triazine,
(202) 2-methylthio-4,6-bis(ethylamino)1,3,5-triazine,
(203) ammonium homoalanin-4-yl(methyl)phosphinate,
(204) 2-chloro-4,6-bis(ethylamino)-1,3,5-triazine,
(205) sodium L-2-amino-4-[(hydroxy)(methyl) phosphinoyl]butyryl-L-alanyl-L-alaninate,
(206) isopropylammonium N-(phosphonomethyl)glycinate,
(207) trimethylsulfonium N-(phosphonomethyl)glycinate,
(208) 2-methylthio-4-ethylamino-6-(1,2-dimethylpropylamino)-1,3,5-triazine,
(209) succinic 2,2-dimethylhydrazide, and
(210) 3-[2-(3,5-dimethyl-2-oxocyclohexyl)-2-hydroxymethyl]glutarimide.

In producing the present composition, the pesticidally active ingredient(s) and 12-hydroxystearic acid are mixed and heated in the range of usually from 70°C to 100°C, preferably from 80°C to 90°C in the presence or absence of a solvent. The amount of 12-hydroxystearic acid used is between 0.1 and 1,000 parts by weight, preferably between 0.5 and 100 parts by weight, particularly preferably between 0.5 and 20 parts by weight per 100 parts by weight of the pesticidally active ingredient. When a solvent is used, it is used in an amount of usually from 0.1 to 1,000 parts by weight per 100 parts by weight of the pesticidally active ingredient.

The solvent includes aromatic hydrocarbons (e.g. alkylbenzene, xylene, phenylxylylethane and methylnaphthalene), esters, aliphatic hydrocarbons, glycol ethers and their acetates, vegetable oils and mineral oils.

The present composition is formulated into wettable powders, dusts or suspension concentrates by mixing a mixture of the above pesticidally active ingredient(s) and 12-hydroxystearic acid with a solid or liquid carrier, a surface active agent and other auxiliaries for formulation as need arises. Of these, suspension concentrates are particularly preferred.

The amount of the pesticidally active ingredient in the present composition is between 0.01% and 60% by weight based on the present composition.

Suspension concentrates can be obtained by dispersing a mixture of the above-mentioned pesticidally active ingredient(s) and 12-hydroxystearic acid in an aqueous solution containing a dispersing agent with stirring. If necessary, an aqueous solution containing a thickener may be added to the suspension concentrates. In this case, a cooling step is inserted either before or after the addition of the aqueous solution containing a thickener. Alternatively, a thickener may be added to the aqueous solution before the mixture of the pesticidally active ingredient(s) and 12-hydroxystearic acid is dispersed therein.

The amount of the dispersing agent contained in the suspension concentrates is usually between 0.1% and 20% by weight based on the suspension concentrates. The amount of the thickener is usually between 0.1% and 20% by weight based on the same.

The dispersing agent can be selected from the surface active agents and the other agents having dispersing ability usually used for the formulation of emulsifiable concentrates or suspension concentrates. Examples of the other agents having dispersing ability are water-soluble polymers, etc. Among the water-soluble polymers, polyvinyl alcohol, gum arabic and polyethylene/ polypropylene block polymers are preferred. Of these, polyvinyl alcohol is particularly preferred.

The thickener includes water-soluble polymers such as synthetic water-soluble polymers (e.g. polyacrylic acid type water-soluble polymers), semi-synthetic water-soluble polymers (e.g. sodium carboxymethyl cellulose), and natural water-soluble polymers (e.g. xanthane gum, locust bean gum, gum tragacanth, canageenan and sodium alginate), inorganic compounds (e.g. aluminum magnesium silicate, synthetic hydrated silicone dioxide, bentonite and hectorite), and the mixtures thereof.

The wettable powders and dusts may be produced using the above suspension concentrate according to the usual manner for producing wettable powders and dusts.

If necessary, synergists, antioxidants, antifreezing agents, preservatives and the like may be added to the present composition.

In applying the present composition, those having a dust form are applied as they are, those having a wettable powder form are applied diluted with water and those having a suspension concentrates are applied as they are or after diluted with water. In applying these compositions, those having a liquid form can be applied using an apparatus usually used to apply emulsifiable concentrates, wettable powders and the like. Also, they can be applied by aerial spraying with a plane, etc..

The dosage of the present composition varies with the kind of the pesticidally active ingredient in the present composition, weather conditions, preparation forms, when, how and where the present composition is applied, targets to which the present composition is applied and the like.

The dosage of the pesticidally active ingredient(s) is usually between 0.01 and 1,000 g/m², preferably between 0.01 and 100 g/m² in the case where the pesticidally active ingredient(s) is(are) selected from insecticides, acaricides and nematocides. It is usually between 0.001 and 1 g/m² in the case where the pesticidally active ingredient(s) is(are) selected from insect growth regulators. It is usually between 1 g/ha and 10 kg/ha in the case where the pesticidally active ingredient(s) is(are) selected from fungicides. It is usually between 1 g/ha and 10 kg/ha in the case where the pesticidally active ingredient(s) is(are) selected from herbicides. It is usually between 0.1 and 1,000 g/a in the case where the pesticidally active ingredient(s) is(are) selected from plant growth regulators.

The present invention will be illustrated in more detail with reference to the following Formulation Examples and Test Examples. However, the present invention is not to be interpreted as being limited to these examples.

### Formulation Example 1

400 Grams of the compound (43) and 14 g of 12-hydroxystearic acid were mixed at 80°C. The mixture was added to 786 g of an aqueous solution containing 80 g of Gohsenol® GL-05 (polyvinyl alcohol produced by The Nippon Synthetic Chemical Industry Co., Ltd.) heated to the same temperature, dispersed for 5 minutes while stirring at 7,000 rpm with TK Auto-homomixer Model M (produced by Tokushu-Kika Co.) and then cooled to room temperature. To the resulting dispersion was added 800 g of an aqueous solution containing 1 g of Kelzan® S (xanthane gum produced by Merk & Co., Inc.) and 2 g of Veegum® R (aluminum magnesium silicate produced by R. T. Vanderbilt Company, Inc.) to obtain a composition containing 20% by weight of the compound (43) and 0.7% by weight of 12-hydroxystearic acid.

### Formulation Example 2

The same procedure as in Formulation Example 1 was repeated, except that the amount of Gohsenol® GL-05 contained in the aqueous solution thereof was changed to 40 g, to obtain a composition containing 20% by weight of the compound (43) and 0.7% by weight of 12-hydroxystearic acid.

### Formulation Example 3

The same procedure as in Formulation Example 1 was repeated, except that the amount of 12-hydroxystearic acid was changed to 21 g and the amount of the aqueous solution containing 80 g of Gohsenol® GL-05 was changed to 779 g, to obtain a composition containing 20% by weight of the compound (43) and 1.05% by weight of 12-hydroxystearic acid.

### Formulation Example 4

The same procedure as in Formulation Example 1 was repeated, except that the amount of 12-hydroxystearic acid was changed to 28 g and the amount of the aqueous solution containing 80 g of Gohsenol® GL-05 was changed to 772 g, to obtain a composition containing 20% by weight of the compound (43) and 1.4% by weight of 12-hydroxystearic acid.

### Formulation Example 5

200 Grams of the compound (3), 400 g of Hisol® SAS-296 (a solvent produced by Nippon Petrochemicals Co., Ltd.) and 9.5 g of 12-hydroxystearic acid were mixed at 85°C. The mixture was added to 590.5 g of an aqueous solution containing 80 g of Gohsenol® GL-05 heated to the same temperature, dispersed for 5 minutes while stirring at 7,000 rpm with TK Auto-homomixer M and then cooled to room temperature. To the resulting dispersion was added 800 g of an aqueous solution containing 2 g of Kelzan® S and 4 g of Veegum® R to obtain a composition containing 10% by weight of the compound (3) and 0.48% by weight of 12-hydroxystearic acid.

### Formulation Example 6

The same procedure as in Formulation Example 5 was repeated, except that the amount of 12-hydroxystearic acid was changed to 28.6 g and the amount of the aqueous solution containing 80 g of Gohsenol® GL-05 was changed to 571.4 g, to obtain a composition containing 10% by weight of the compound (3) and 1.43% by weight of 12-hydroxystearic acid.

### Formulation Example 7

The same procedure as in Formulation Example 5 was repeated, except that the amount of 12-hydroxystearic acid was changed to 85.7 g and the amount of the aqueous solution containing 80 g of Gohsenol® GL-05 was changed to 514.3 g, to obtain a composition containing 10% by weight of the compound (3) and 4.29% by weight of 12-hydroxystearic acid.

### Formulation Example 8

100 Grams of the compound (43), 150 g of the compound (62) and 9 g of 12-hydroxystearic acid were mixed at 90°C. The mixture was added to 301 g of an aqueous solution containing 40 g of Gohsenol® KL-05 (polyvinyl alcohol produced by The Nippon Synthetic Chemical Industry Co., Ltd.) heated to the same temperature, and dispersed for 10 minutes while stirring at 6,500 rpm with TK Auto-homomixer Model M and then cooled to room temperature. To the resulting dispersion were added 420 g of an aqueous solution containing 2 g of Kelzan® S and 2 g of Veegum® R and 20 g of propylene glycol to obtain a composition containing 10% by weight of the compound (43), 15% by weight of the compound (62) and 0.9% by weight of 12-hydroxystearic acid.

### Formulation Example 9

50 Grams of the compound (158), 200 g of Solvesso® #100 (a solvent produced by Exxon Chemical Co.) and 4.3 g of 12-hydroxystearic acid were mixed at 85°C. The mixture was added to 395.7 g of an aqueous solution containing 40 g of Gohsenol® GL-05 heated to the same temperature, and dispersed for 5 minutes while stirring at 7,000 rpm with TK Auto-homomixer Model M. To the resulting dispersion was added 350 g of an aqueous solution containing 2 g of Kelzan® S and 4 g of Veegum® R heated to 60°C. The resulting mixture was cooled to room temperature to obtain a composition containing 5% by weight of the compound (158) and 0.43% by weight of 12-hydroxystearic acid.

### Formulation Example 10

The same procedure as in Formulation Example 5 was repeated, except that the compound (3) was replaced by the compound (1), to obtain a composition containing 10% by weight of the compound (1) and 0.48% by weight of 12-hydroxystearic acid.

### Formulation Example 11 .

The same procedure as in Formulation Example 5 was repeated, except that the compound (3) was replaced by the compound (2), to obtain a composition containing 10% by weight of the compound (2) and 0.48% by weight of 12-hydroxystearic acid.

### Formulation Example 12

The same procedure as in formulation Example 5 was repeated, except that the compound (3) was replaced by the compound (4), to obtain a composition containing 10% by weight of the compound (4) and 0.48% by weight of 12-hydroxystearic acid.

### Formulation Example 13

The same procedure as in Formulation Example 5 was repeated, except that the compound (3) was replaced by the compound (7), to obtain a composition containing 10% by weight of the compound (7) and 0.48% by weight of 12-hydroxystearic acid.

### Formulation Example 14

The same procedure as in Formulation Example 5 was repeated, except that the compound (3) was replaced by the compound (6), to obtain a composition containing 10% by weight of the compound (6) and 0.48% by weight of 12-hydroxystearic acid.

### Formulation Example 15

The same procedure as in Formulation Example 5 was repeated, except that the compound (3) was replaced by the compound (13), to obtain a composition containing 10% by weight of the compound (13) and 0.48% by weight of 12-hydroxystearic acid.

Next, comparative formulation examples will be shown.

### Comparative Formulation Example 1

50 Grams of the compound (43), 20 g of Sorpol® 1200KX (a surface active agent produced by Toho Chemical Industry Co., Ltd.) and 30 g of xylene were mixed to obtain an emulsifiable concentrate containing 50% by weight of the compound (43).

### Comparative Formulation Example 2

20 Grams of the compound (3), 10 g of Sorpol® 3005X (a surface active agent produced by Toho Chemical Industry Co., Ltd.) and 70 g of xylene were mixed to obtain an emulsifiable concentrate containing 20% by weight of the compound (3).

Next, test examples will be shown.

### Test Example 1

The compositions obtained in the above Formulation Examples and Comparative Formulation Examples were each diluted with water to a prescribed concentration. The leaves of cabbage were immersed in the dilution for 1 minute and air-dried. The treated leaves and 10 larvae of tabacco cutworm (Spodoptera litura) were put in a plastic cup. After 2 days, the number of dead and moribund insects was counted for LC₅₀ (ppm), the concentration of pesticidally active ingredient at which half the insects are killed. Tables 1 and 2 show the results.

**Table 1**

| Test composition | LC₅₀ (ppm) |
|---|---|
| Formulation Example 1 | 52 |
| Formulation Example 2 | 50 |
| Formulation Example 3 | 46 |
| Formulation Example 4 | 58 |
| Comparative Formualation Example 1 | 187 |

**Table 2**

| Test composition | LC₅₀ (ppm) |
|---|---|
| Formulation Example 5 | 10 |
| Formulation Example 6 | 9 |
| Formulation Example 7 | 6 |
| Comparative Formulation Example 2 | 15 |

## Claims

1. A pesticidal composition comprising (a) at least one pesticidally active ingredient and (b) 12-hydroxystearic acid.

2. A composition according to Claim 1, wherein the weight ratio of component (a) to component (b) is in the range of from 100:0.1 to 100:1,000 inclusive.

3. A composition according to Claim 1 or 2, wherein the amount of component (a) is within the range of from 0.01 to 60% by weight of the composition.

4. A composition according to Claim 1, 2 or 3 which is formulated into a suspension concentrate.

5. A composition according to any one of claims 1 to 4 wherein component (a) is a pyrethroid.

6. A composition according to any one of claims 1 to 4 wherein component (a) is an organophosphorate.

7. A composition according to any one of claims 1 to 4 wherein component (a) is a carbamate.

8. A composition according to any one of claims 1 to 4 wherein component (a) is 0,0-dimethyl 0-(3-methyl-4-nitrophenyl)phosphorothioate.

9. A composition according to any one of claims 1 to 4 wherein component (a) is α-cyano-3-phenoxybenzyl 2,2,3,3-tetramethylcyclopropanecarboxylate.

10. A composition according to any one of claims 1 to 4 wherein component (a) is a mixture of 0,0-dimethyl 0-(3-methyl-4-nitrophenyl)phosphorothioate and 2-sec-butylphenyl N-methylcarbamate.

11. A composition according to any one of claims 1 to 4 wherein component (a) is N-[4-chloro-2-fluoro-5-(1-methyl-2-propynyloxy)phenyl]-3,4,5,6-tetrahydrophthalimide.

12. A composition according to any one of claims 1 to 4 wherein component (a) is α-cyano-3-phenoxybenzyl 2-(4-chlorophenyl)-3-methylbutyrate.

13. A composition according to any one of claims 1 to 4, wherein component (a) is (S)-α-cyano-3-phenoxybenzyl (S)-2-(4-chlorophenyl)-3-methylbutyrate.

14. A composition according to any one of claims 1 to 4, wherein component (a) is 3-phenoxybenzyl 3-(2,2-dichlorovinyl)-2,2-dimethylcyclopropanecarboxylate.

15. A composition according to any one of claims 1 to 4, wherein component (a) is α-cyano-3-phenoxybenzyl 3-(2,2-dichlorovinyl)-2,2-dimethylcyclopropanecarboxylate.

16. A composition according to any one of claims 1 to 4, wherein component (a) is 3-phenoxybenzyl (1R)-chrysanthemate.

17. A composition according to any one of claims 1 to 4, wherein component (a) is α-cyano-3-phenoxybenzyl (1R)-chrysanthemate.

18. A method for increasing the pesticidal efficacy of a pesticidal composition which comprises adding 12-hydroxystearic acid to the pesticidal composition.

19. Use of 12-hydroxystearic acid for increasing the pesticidal efficacy of a pesticidal composition.
